# EUROPEAN PATENT SPECIFICATION

(11) **EP 2 618 211 B1**
(45) Date of publication and mention of the grant of the patent: **10.06.2015**
(21) Application number: 13150261.9
(22) Date of filing: 04.01.2013
(51) Int. Cl.: G03B 17/56, A47L 25/00, H04N 5/00, B60S 1/04

(54) **Dome cleaner**
Kuppelreiniger
Nettoyeur de dôme

(30) Priority: 23.01.2012 GB 201201053
(43) Date of publication of application: 24.07.2013
(73) Proprietor: Brinkley, David Michael, Bishop's Stortford, Hertfordshire CM22 6AR (GB); Starling, Nicholas John, Ware, Hertfordshire SG12 7BY (GB)
(72) Inventor: Brinkley, David Michael, Bishop's Stortford, Hertfordshire CM22 6AR (GB); Starling, Nicholas John, Ware, Hertfordshire SG12 7BY (GB)
(74) Representative: Harrison IP Limited

(56) References cited:
- CN-Y- 201 194 788
- JP-A- 2000 056 367
- JP-A- 2011 151 516
- US-B1- 7 392 564

## Description

### Field of the Invention

This invention relates to a cleaner head for curved fittings and particularly for dome-type covers for security cameras or light fittings and similar structures. The cleaner head is particularly useful for fittings mounted at a height or otherwise difficult to reach.

### Background of the Invention

To maximise coverage, security cameras and overhead light fittings usually need to be mounted as high as possible. For security cameras in particular, it is important that they are more or less inaccessible. For these reasons, cleaning of the lenses or associated covers can be difficult or dangerous without specialist equipment.

Accumulation of dust, dirt and other contaminants will degrade the performance of a security camera or light fitting and they must therefore be cleaned at intervals. Typically, the lens or an outer transparent cover is dome shaped. By "dome" we mean any rounded structure including at least part of a spherical surface. For example, "dome" includes a complete sphere as well as the typical hemisphere or a generally cylindrical structure having a part-spherical end.

USA patent 7392564 dated 1 July 2008, assigned to Dotworkz, describes and claims a cleaning device for spherical-shaped covers having a plurality of flexible blades of defined configuration with an expandable cleaning pad attached to the tips of the blades. As the device is pushed onto a spherical dome cover, the blades flex outward around the dome.

### Summary of the Invention

A dome cleaner for overhead security cameras or light fittings comprises a pair of wiper arms pivotally mounted on a base. Upwards pressure against the dome causes the arms to spread outwards and the wipers to pass easily around the dome. Return springs maintain pressure on the dome and return the arms to their closed position as the cleaner head is withdrawn from the dome.

According to the invention, we provide a cleaner head adapted for a curved fitting comprising at least one pair of arms each bearing a wiper at one end of the arm, wherein the other ends of the arms are pivotally mounted on a base and the or each pair of arms includes a co-operating surface slidable over a corresponding profiled surface on the base, the respective surfaces being so shaped that application of an axial force along the arms urges the arms to move apart.

Preferably, the respective surfaces on the arms and the base comprise angled planes, that is the respective surfaces are at an angle to the longitudinal axis of the cleaner head. In a particularly advantageous configuration, a pivot on the base slidably engages in a longitudinal slot in the corresponding arm, thereby enabling both longitudinal and rotational movement of the arms.

In use, the base of the cleaner head may be permanently or removeably attached to a pole or handle in conventional manner. The cleaner head is pressed against the dome or other fitting to engage the wipers. The resultant axial reaction force causes the arms to rotate outwards while the wipers are pushed over the curved surface of the fitting. In the preferred pivot and slot configuration referred to above, the arms slide towards the base while a wedge action of the engaged surfaces simultaneously rotates the arms outwards around the pivot.

In order that the wipers remain in contact with the dome or other fitting while they pass over it, we prefer that the arms of the or each pair are resiliently urged towards each other. Conveniently, the arms may be connected by a spring. When the pivot and slot configuration is used, a spring in the slot may bear against the pivot and the arm, being compressed as the arm slides towards the base.

The wipers may be angled relative to their respective arms such that the wipers are effectively parallel to the base of the fitting when the arms are in a fully open position.

Preferably, the wipers are curved, particularly with a radius of curvature substantially corresponding with that of the surface to be cleaned in order to maximise engagement of the wipers with the fitting. The arms may be shaped to clear the fitting as the wipers slide over the curved surface. For example, the arms will move together as the wipers pass an equator of a spherical surface.

Conveniently, the wipers incorporate a cushion between the wiper and the surface being cleaned. They may be resiliently mounted on the arms.

The cleaner head may be associated with at least one fluid nozzle, which can spray a cleaning or polishing liquid or blow air over the dome.

The wipers may engage the fitting directly, or removable cleaning and polishing sleeves or pads can be mounted on the wipers in any convenient manner.

The cleaner may include a set of interchangeable cleaner heads to cater for different sizes of dome or other fitting.

### Brief Description of the Drawings

Figure 1A is a section through a dome cleaner head with the arms in the closed position;
Figure 1B is a schematic showing the wipers against the dome when the cleaner arms are in the closed position;
Figure 2A is a section through a dome cleaner head with the arms half open;
Figure 2B is a schematic showing the wipers against the dome when the cleaner arms are half open;
Figure 3A is a section through a dome cleaner head with the arms fully open;
Figure 3B is a schematic showing the wipers against the dome when the cleaner arms are fully open; and
Figure 4 is a cleaner base showing the profiled surface.

### Description of a Preferred Embodiment

The cleaning head is described with reference to an overhead-mounted hemispherical dome, which is a typical installation. The invention is not limited to any particular orientation of the dome or other object being cleaned. It will be apparent that "downwards", "upwards" and similar expressions are relative to the dome and do not limit the invention to any particular configuration.

The cleaner head consists of a pair of arms 1, each bearing a wiper 8 and pivotally mounted on a base 2. Wipers 8 are secured to the upper ends of their respective arms 1 and bear a resilient blade 9, for example a rubber extrusion. Pivot pins 4 are fixed to and project from the base 2. Each pin 4 engages a corresponding arm 1 through a slot 5. Each slot 5 contains a compression spring 6 bearing on the pin 4 and urging the arm 1 upwards. The arms 1 are also linked by a spring 7.

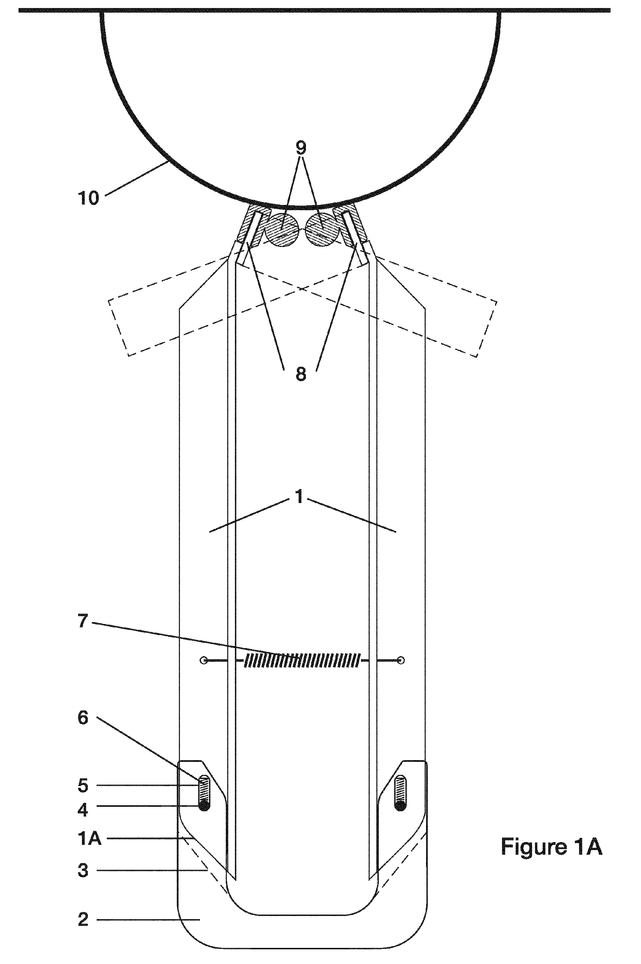

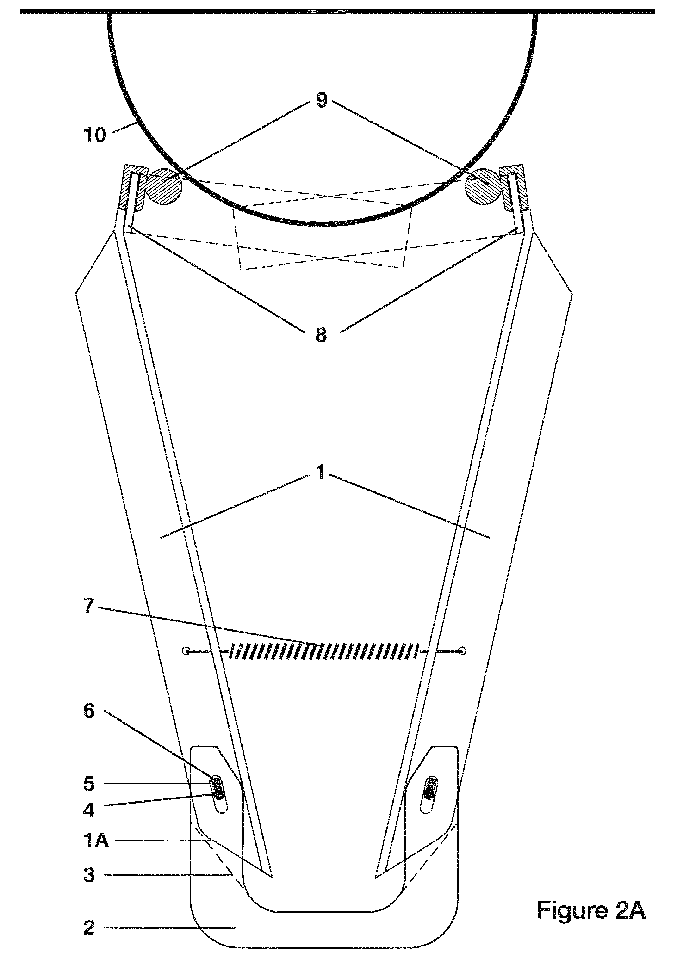

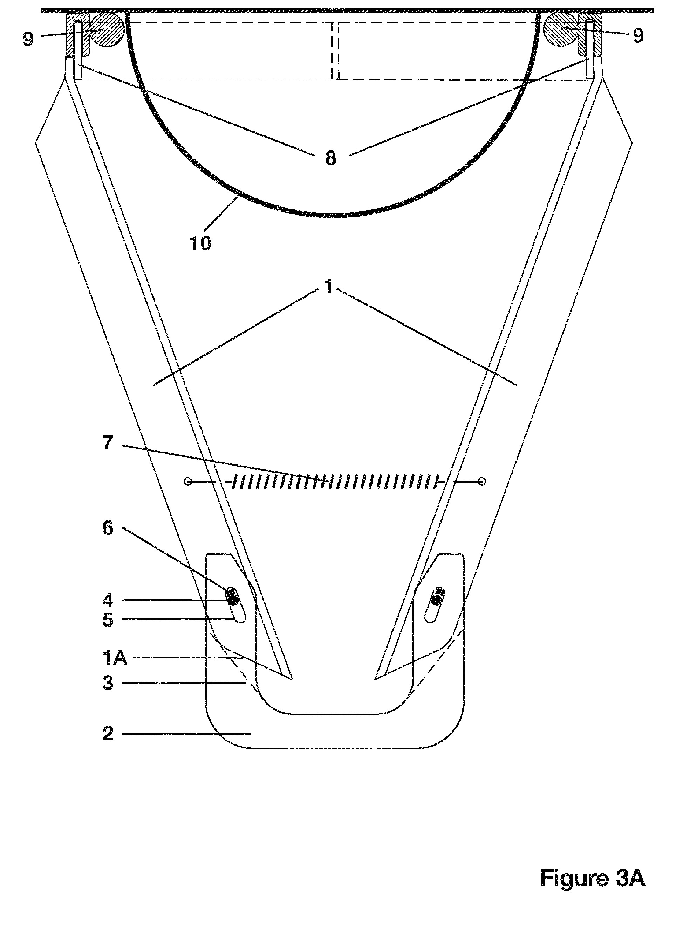

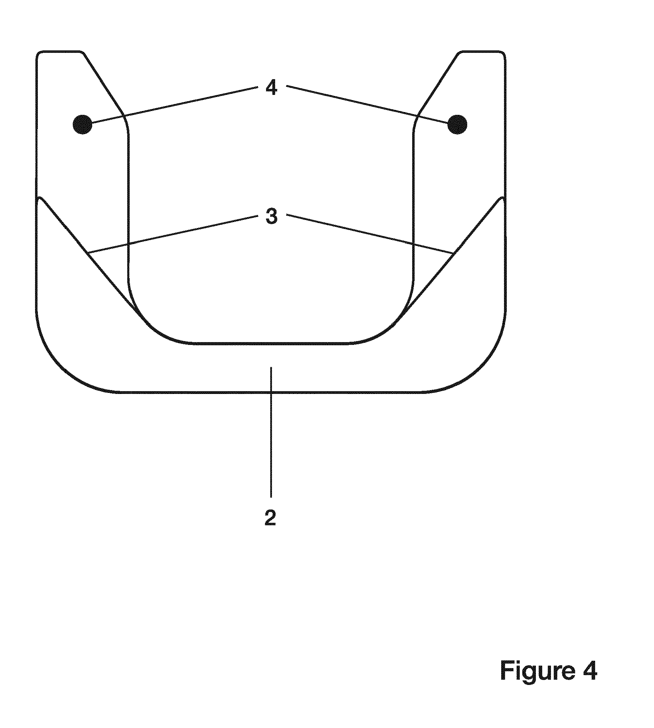

The lower end of each arm 1 is angled. Each angled surface 1A is slidable over a corresponding profiled surface 3 on the base 2. Profiled surfaces 3 are shown in dotted lines in Figures 1A, 2A and 3A, and in more detail in Figure 4.

The cleaner head may be attached in any convenient manner to a pole or handle (not shown).

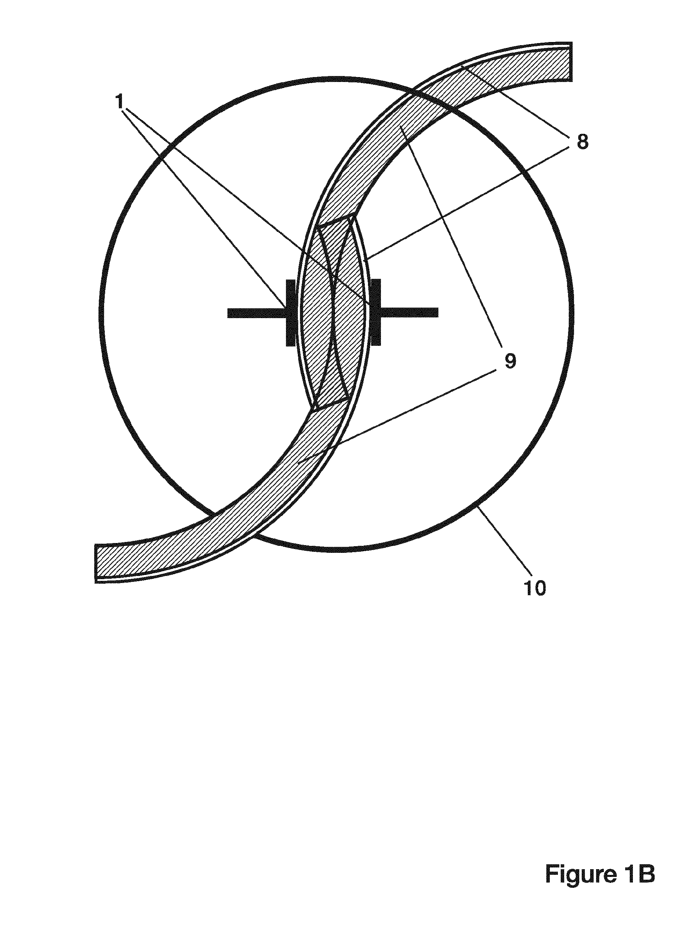

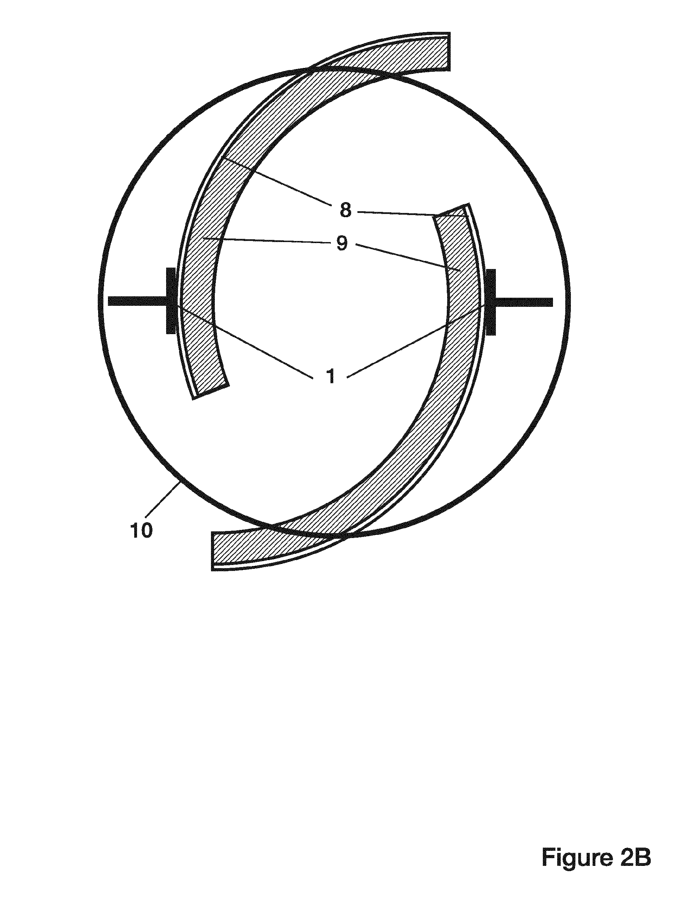

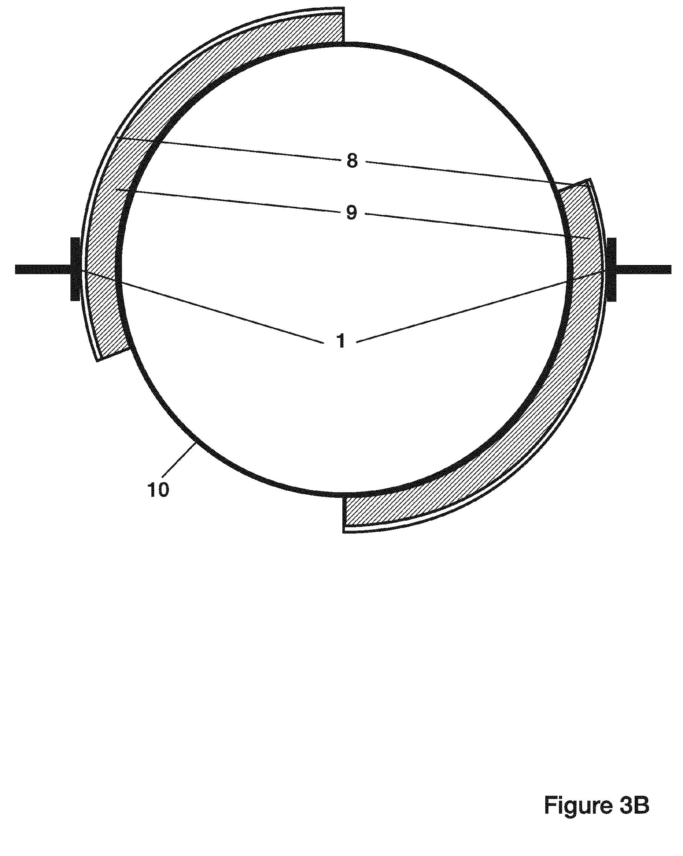

In use, the operator pushes the wipers 8 and blades 9 up against a dome 10. As shown in Figures 1 to 3, the resultant downwards pressure on the arms 1 causes them to slide down the pins 4. Angled surfaces 1A slide over the corresponding profiled surfaces 3, which are so shaped that the downwards movement of the arms 1 causes them to pivot on pins 4 and the upper ends to spread apart, thus enabling the wipers 8 and blades 9 to pass easily around the dome 10. Springs 6 and 7 exert pressure between the wipers 8 and the surface of the dome 10 in order to improve cleaning efficiency. They also return the arms 1 to their closed position as the cleaner head is withdrawn from the dome 10.

Wipers 8 are so angled that the wipers 8 are effectively parallel with the base of the dome 10 when the arms 1 are at maximum spread. Wipers 8 are radiused to conform with the size of the dome 10 being cleaned. The wipers 8 or the cleaner head may be interchanged to suit different size domes 10.

Wiper blades 9 have a cushioning effect which helps to maintain a good contact area between the wipers 8 and the dome 10.

Different sleeves or pads (not shown) can be fitted on or over the wipers 8 and blades 9 in conventional manner at different stages of the cleaning process - washing, drying, dusting, polishing etc.

Cleaning or polishing products can be applied to the wiper blades 9 or the associated sleeves in conventional manner. Alternatively, the cleaner head may be associated or used in conjunction with conventional nozzles spraying a liquid onto or blowing air over the dome 10.

The cleaner head is suitable for both indoor and outdoor use. It will be apparent that the invention is applicable to a wide variety of relatively inaccessible curved structures and is not limited to security cameras and light fittings. For example and without limitation, the arms and wipers can be so configured that the cleaner head may be used for cylindrical structures such as straight or curved fluorescent tubes.

## Claims

1. A cleaner head adapted for a curved fitting (10) comprising at least one pair of arms (1) each bearing a wiper (8) at one end of the arm (1); **characterised in that** the other ends of the arms (1) are pivotally mounted on a base (2) and the or each pair of arms (1) includes a co-operating surface (1A) slidable over a corresponding profiled surface (3) on the base (2), the respective surfaces (1a, 3) being so shaped that application of an axial force along the arms (1) urges the arms to move apart.

2. A cleaner head as claimed in Claim 1 adapted for a dome-shaped fitting (10).

3. A cleaner head as claimed in Claim 2 adapted for a hemispherical fitting (10).

4. A cleaner head as claimed in any one of the preceding claims wherein the respective surfaces (1a, 3) comprise angled planes.

5. A cleaner head as claimed in any one of the preceding claims wherein a pivot (4) on the base (2) slidably engages in a longitudinal slot (5) in the corresponding arm (1).

6. A cleaner head as claimed in any one of the preceding claims wherein the arms (1) of the or each pair are resiliently urged towards each other.

7. A cleaner head as claimed in Claim 6 wherein a pivot (4) on the base (2) slidably engages in a longitudinal slot (5) in the corresponding arm (1) and a spring (6) in the slot bears against the pivot (4) and the arm (1).

8. A cleaner head as claimed in any one of the preceding claims wherein, in use, the wipers (8) are so angled relative to their respective arms (1) that the wipers (8) are effectively parallel to the base of the fitting (10) when the arms (1) are in a fully open position.

9. A cleaner head as claimed in any one of the preceding claims wherein the wipers (8) are curved.

10. A cleaner head as claimed in Claim 9 wherein the radius of curvature of the wipers (8) substantially corresponds with that of the fitting (10).

11. A cleaner head as claimed in any one of the preceding claims wherein the wipers (8) incorporate a cushion (9) between the wiper (8) and the fitting (10).

12. A cleaner head as claimed in any one of the preceding claims associated with at least one fluid nozzle.

13. A cleaner head as claimed in any one of the preceding claims wherein removable sleeves or pads can be mounted on the wipers.

14. A set of interchangeable cleaner heads as claimed in any one of the preceding claims.

15. A cleaner for a curved fitting (10) comprising a pole bearing a head as claimed in any one of the preceding claims.

## Patentansprüche

1. Ein Reinigungskopf für ein gekrümmtes Formstück (10), der mindestens ein Paar Arme (1) umfasst, die jeweils an einem Ende des Arms (1) einen Wischer (8) aufweisen; **dadurch gekennzeichnet, dass** das jeweils andere Ende der Arme (1) schwenkbar auf einer Basis (2) montiert ist und dass das oder jedes Paar Arme (1) eine kooperierende Oberfläche (1A) umfasst, die über eine entsprechende Profilfläche (3) auf der Basis (2) geschoben werden kann, wobei die jeweiligen Oberflächen (1a, 3) so geformt sind, dass die Anwendung einer Axialkraft entlang der Arme (1) dazu führt, dass sich die Arme auseinander bewegen.

2. Ein Reinigungskopf gemäß Anspruch 1 für ein kuppelförmiges Formstück (10).

3. Ein Reinigungskopf gemäß Anspruch 2 für ein halbkugelförmiges Formstück (10).

4. Ein Reinigungskopf gemäß einem der vorangehenden Ansprüche, wobei die jeweiligen Oberflächen (1a, 3) abgewinkelte Flächen umfassen.

5. Ein Reinigungskopf gemäß einem der vorangehenden Ansprüche, wobei ein Drehgelenk (4) auf der Basis (2) verschiebbar in einem Längsschlitz (5) im entsprechenden Arm (1) einrastet.

6. Ein Reinigungskopf gemäß einem der vorangehenden Ansprüche, wobei die Arme (1) des oder jedes Paares elastisch zueinander gedrängt werden.

7. Ein Reinigungskopf gemäß Anspruch 6, wobei ein Drehgelenk (4) auf der Basis (2) verschiebbar in einem Längsschlitz (5) im entsprechenden Arm (1) einrastet und eine Feder (6) im Schlitz dem Drehgelenk (4) und dem Arm (1) standhält.

8. Ein Reinigungskopf gemäß einem der vorangehenden Ansprüche, wobei in der Verwendung die Wischer (8) im Verhältnis zu ihren jeweiligen Armen (1) so angewinkelt sind, dass die Wischer (8) effektiv parallel zur Basis des Formstücks (10) sind, wenn sich die Arme (1) in einer vollständig geöffneten Position befinden.

9. Ein Reinigungskopf gemäß einem der vorangehenden Ansprüche, wobei die Wischer (8) gekrümmt sind.

10. Ein Reinigungskopf gemäß Anspruch 9, wobei der Radius der Krümmung der Wischer (8) im Wesentlichen dem des Formstücks (10) entspricht.

11. Ein Reinigungskopf gemäß einem der vorangehenden Ansprüche, wobei die Wischer (8) ein Polster (9) zwischen dem Wischer (8) und dem Formstück (10) aufweisen.

12. Ein Reinigungskopf gemäß einem der vorangehenden Ansprüche zusammen mit mindestens einer Flüssigkeitsdüse.

13. Ein Reinigungskopf gemäß einem der vorangehenden Ansprüche, wobei abnehmbare Manschetten oder Polster an den Wischern befestigt werden können.

14. Ein Satz austauschbarer Reinigungsköpfe gemäß einem der vorangehenden Ansprüche.

15. Ein Reiniger für ein gekrümmtes Formteil (10) mit einer Stange, an der der Kopf gemäß einem der vorangehenden Ansprüche befestigt ist.

## Revendications

1. Une tête de nettoyage adaptée pour un raccord courbe (10) comprenant au minimum une paire de bras (1) portant chacun un racleur (8) à un bout du bras (1) ; **caractérisée par le fait que** les autres bouts des bras (1) sont montés par pivotement sur une base (2) et la ou chaque paire de bras (1) comprend une surface concourante (1A) pouvant coulisser sur une surface profilée correspondante (3) sur la base (2), les surfaces respectives (1a, 3) étant façonnées de sorte que l'application d'une force axiale le long des bras (1) pousse les bras à se déplacer en s'éloignant l'un de l'autre.

2. Une tête de nettoyage selon la revendication 1, adaptée pour un raccord de forme bombée (10).

3. Une tête de nettoyage selon la revendication 2, adaptée pour un raccord de forme hémisphérique (10).

4. Une tête de nettoyage selon une quelconque des revendications précédentes, dans laquelle les surfaces respectives (1a, 3) comprennent des plans inclinés.

5. Une tête de nettoyage selon une quelconque des revendications précédentes, dans laquelle un pivot (4) sur la base (2) s'engage par coulissement dans une fente longitudinale (5) dans le bras correspondant (1).

6. Une tête de nettoyage selon une quelconque des revendications précédentes, dans laquelle les bras (1) de la ou chaque paire subissent une poussée élastique l'une vers l'autre.

7. Une tête de nettoyage selon la revendication 6, dans laquelle un pivot (4) sur la base (2) s'engage par coulissement dans une fente longitudinale (5) dans le bras correspondant (1), et un ressort (6) dans la fente fait pression contre le pivot (4) et le bras (1).

8. Une tête de nettoyage selon une quelconque des revendications précédentes, dans laquelle, en cours d'usage, les racleurs (8) sont tellement inclinés relativement à leurs bras respectifs (1) que les racleurs (8) sont en fait parallèles à la base du raccord (10) lorsque les bras (1) sont entièrement ouverts.

9. Une tête de nettoyage selon une quelconque des revendications précédentes, dans laquelle les racleurs (8) sont courbes.

10. Une tête de nettoyage selon la revendication 9, dans laquelle le rayon de courbure des racleurs (8) correspond dans une grande mesure à celle du raccord (10).

11. Une tête de nettoyage selon une quelconque des revendications précédentes, dans laquelle les racleurs (8) comprennent un coussin (9) entre le racleur (8) et le raccord (10).

12. Une tête de nettoyage selon une quelconque des revendications précédentes associées avec au moins une buse de fluide.

13. Une tête de nettoyage selon une quelconque des revendications précédentes, dans laquelle des gaines ou tampons amovibles peuvent être montés sur les racleurs.

14. Un jeu de têtes de nettoyage interchangeables selon une quelconque des revendications précédentes.

15. Un dispositif de nettoyage pour un raccord courbe (10) comprenant un poteau portant une tête selon une quelconque des revendications précédentes.
